# EUROPEAN PATENT APPLICATION

(11) **EP 1 117 070 A2**
(43) Date of publication of application: **18.07.2001**
(21) Application number: 00204041.8
(22) Date of filing: 17.11.2000
(51) Int. Cl.: G06T 1/00

(54) **Constructing profiles to compensate for non-linearities in image capture**

(30) Priority: 29.11.1999 US 451303
(71) Applicant: EASTMAN KODAK COMPANY, Rochester, New York 14650 (US)
(72) Inventor: Reiman, Donald M., c/o Eastman Kodak Company, Rochester, New York 14650-2201 (US); Setchell, John S., c/o Eastman Kodak Company, Rochester, New York 14650-2201 (US)
(74) Representative: Lewandowsky, Klaus, Dipl.-Ing.

(57) **Abstract**

A chart having color patches, each color patch including information which permits the mapping of a digitized color image from an image captured by various means to construct a Profile usable in modifying the tone scale and color of the digital image, the number of color patches being greater than 24 and being selected to compensate for non-linear characteristics of image capture.

## Description

The present invention relates to a chart and a methodology for use of the chart to improve the color rendering of digital images.

It is well known to capture color images of various test targets for a variety of reasons such as the calibration of digital input devices or calibration of printing equipment (both chemical and digital).

Profiles of digital imaging components are valuable in that they permit the connection of a variety of digital input devices to a variety of digital output devices to achieve consistent color reproduction.

Color management software programs such as Kodak ColorFlow have been devised to permit the building of Profiles using digital cameras to photograph a multi-colored test target.

Current color management systems do not adequately address the issue of the configuration of a color chart with regard to characteristics of the capture elements of the system.

A significant problem with producing images from typical chemical and digital capture devices is the non-linearity of the encoding of the colors associated with such devices, leading to difficulties in adequately modeling the performance of these devices.

It is an object of the present invention to improve images derived from capture devices, wherein such images have accurate or preferred rendering of colors.

This object is achieved by a chart having a plurality of color patches, each color patch including information which permits the mapping of digitized color data from an image captured by various means to construct a Profile usable in modifying the tone scale and color of the digital image, the number of color patches being greater than 24 and being selected to compensate for non-linear characteristics of image capture.

This object is further achieved by a method of producing an improved digital image comprising the steps of:
(a) acquiring a digital image and a chart having color patches including information which permits mapping the colors from the digital image, the number of color patches being selected to compensate for non-linear characteristics of elements in the acquisition process;
(b) constructing a Profile from the acquired color patches useable in modifying the digital image; and
(c) using the Profile to modify the acquired digital image.

An important feature of the present invention is the provision of a color chart and methodology for construction and use of a color chart which includes information that can permit the capture of images with subsequent processing that results in improved color and tone scale of a digital print or other output realization by compensating for non-linearities in color capture devices by selecting the spectral characteristics of patches of the color chart to permit the modeling and subsequent compensation for device non-linearities.

It has been found that the color management software can also be used to build Profiles from a digitized image which has the color chart included in the original scene element. Once this has been done for one image, like images captured under similar conditions can be subsequently modified by the said Profile without the inclusion of the chart.

There are many other advantages from using Profiles made in accordance with the present invention from color films which include:
Improved color reproduction for a large range of colors being the result of better modeling and subsequent profiling from a color chart and methodology;
Improved color reproduction for images originating by capture on color negative or positive materials and subsequently scanned;
Improved color reproduction for images originating from a variety of digital camera capture devices;
Improved color reproduction from a variety of lighting conditions;
Improved color reproduction from chemical process variations; and

Consistent color reproduction from a variety of film scanners.
FIG. 1 shows the sequence of steps for making a print from a photographic film by modifying a scanned digital image produced from the film in accordance with the present invention;
FIG. 2 shows another sequence of steps to make a print in accordance with the present invention which uses a digital camera to produce the original unmodified digital image;
FIG. 3 shows another flow chart wherein the color chart is used to characterize a scanner in accordance with the present invention;
FIG. 4A illustrates the construction of a Profile; and
FIG. 4B is a flow chart of the operation of computer 180 shown in FIG. 1 which illustrates application of the constructed Profile to digitized images to modify digital images.

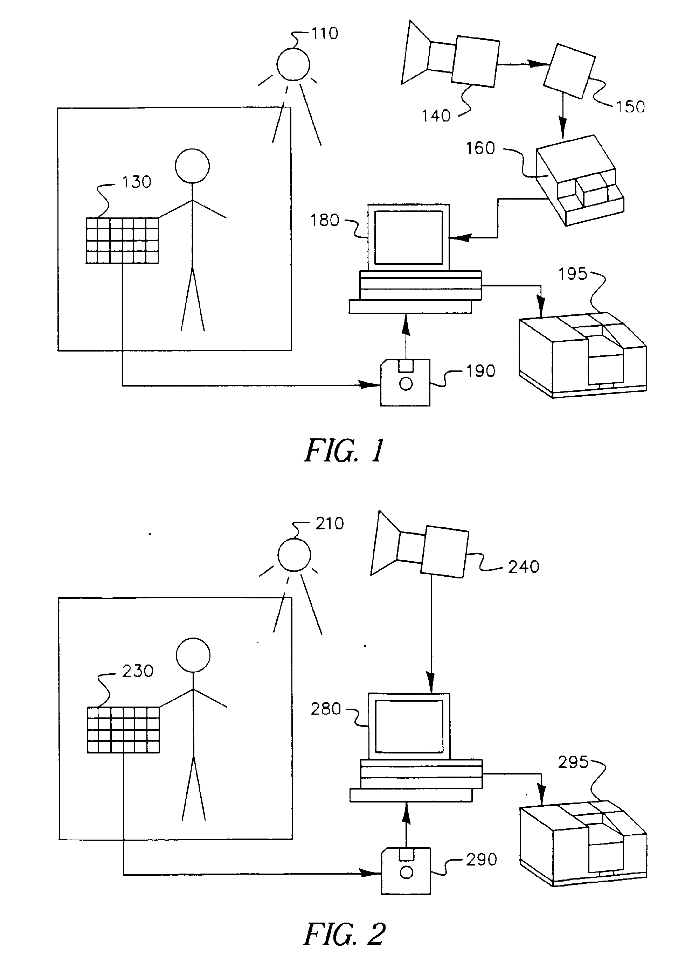

Referring to FIG. 1, which shows a sequence of steps for more precise color and tone scale control using a custom built chart 130 composed of 242 color and 22 neutral patches. It has been found that the patches can be reflective or transmissive. Color and neutral patches were composed of spectrally broadband colorants either in the form of pigments or dyes. The color patches were composed of multiple hues varying in lightness and chroma. This was done in order to effectively sample a large scene color space. The neutral patches were composed of patches varying in lightness from white to black and are used for the tone and gray scale reproduction. The neutrals in this case were composed of spectrally nonselective pigments over the visual spectral range.

In the case of the reflective color patches, they were arranged on approximately an 8 x 10 inch board for portability and ease of use. The chart 130 was used as an element in a scene 120 illuminated by a light source 110 using conventional film capture. An image of the scene was captured by a conventional camera 140 on film 150 as a latent image record of exposures of the elements of the scene. The film was chemically processed (not shown) by conventional means to produce an image. The film image was scanned in a scanning device 160, resulting in digital code values for the picture elements (pixels). These digital values were input to a computer 180 containing a software program contained on a disk 190. The color chart was measured colorimetrically by a conventional spectrophotometer or colorimeter (not shown), and the resulting data supplied to the computer on the same disk 190 or by other means. The software program used the code values and the colorimetric data to construct a Profile. The term "Profile" means and refers to "a digital signal-processing transform, or collection of transforms, plus additional information concerning the transform(s), device, and data."(from *Digital Color Management,* Edward Giorgianni & Thomas Madden, Addison-Wesley, 1997). The Profile making process is explained in further detail below. Profiles made in accordance with the present invention were used by image processing computer software to produce a colorimetrically accurate reproduction or a preferred color and tone scale reproduction of the original scene by means, for example, of a color printer 195.

Referring to FIG. 2, a color chart 230 was used as an element in a scene 220 illuminated by a light source 210 using a digital camera 240 as a capture device in the imaging system. These digital values were input to a computer 280 containing a software program contained on a disk 290. The color chart 230 was measured colorimetrically by a conventional spectrophotometer or colorimeter (not shown), and the resulting data supplied to the computer on the same disk 290. The software program was employed using the code values and the colorimetric data to construct a Profile. This Profile was used to produce a colorimetrically accurate reproduction or a preferred color and tone scale reproduction of the original scene by means, for example, of a color printer 295.

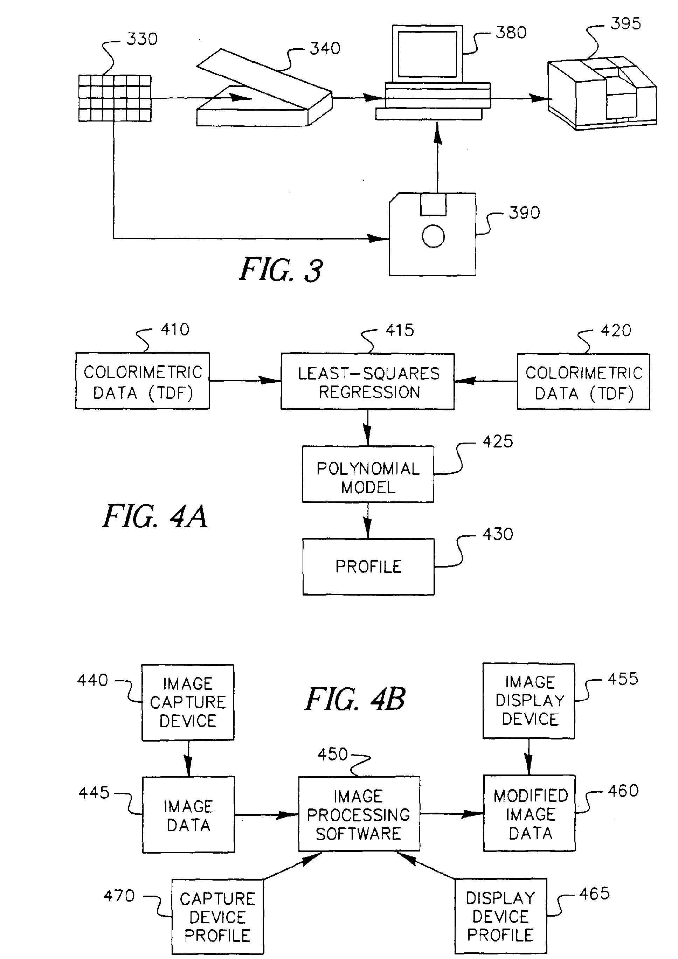

Referring to FIG. 3, a Profile for a scanner 340 was directly created by scanning a chart 330. The digital values from the scan were input to a computer 380 containing a software program contained on a disk. The color chart 330 was measured colorimetrically by a conventional spectrophotometer or colorimeter (not shown), and the resulting data supplied to the computer on the same disk 390. The software program used the code values and the colorimetric data to construct a Profile. This Profile was used by image processing computer software to produce a colorimetrically accurate reproduction or a preferred color and tone scale reproduction of the original scene by means, for example, of a color printer 395. It should be noted that, with this method, the scanner captures an image of any object, for example a painting, whose colors are not limited to those produced with a set of photographic dyes, and that the Profile created with the use of the said target permits a more accurate reproduction of the said object than has heretofore been possible with photographic dyes.

Digital imaging systems may typically employ a technique known as color management to provide the desired color and tone characteristics of an output image. An embodiment of this color management technique is diagrammed in FIG. 4B. The image is acquired by an Image Capture Device 440, which may be a digital camera, a film scanner, a print scanner, or other device. The digital Image Data 445 from the Image Capture Device is input to Image Processing Software 450 residing in a host computer (not shown). Also input to the Image Processing software are a Capture Device Profile 470 and a Display Device Profile 465. These Profiles contain information about the color processing characteristics of their respective devices. The Image Processing Software uses this information to produce Modified Image Data 460 which is then supplied to an Image Display Device 455. The Image Display Device may be a thermal printer, ink jet printer, electrophotographic printer, photographic printer, cathode ray tube (CRT) display, liquid crystal display (LCD), or other display device.

A Profile for use by a color management system is created by a process like that shown in FIG. 4A., where colorimetric data 410, often in the form of a target description file (TDF) for a target (not shown), is combined with digital Device Code Values 420 relating to the same target in a mathematical process such as Least-squares Regression 415 to produce a mathematical model such as a Polynomial Model 425. This model was then used to construct a Profile 430 containing one or more transforms and other data describing the device.

In the case of an image capture device, the colorimetric data is typically obtained by measuring with a spectrophotometer or colorimeter a target which is then captured by the image capture device. The image capture device produces a digital image of the target, from which the device code values are obtained. In the case of an image display device, the process is reversed; device code values for a digital target image are supplied to the device, which then produces a real image, either hard copy in the case of a printer, or softcopy in the case of a CRT or LCD. The colors of this real image are then measured with the aforesaid spectrophotometer or colorimeter. In either case, colorimetric data and device code values are combined in the process described above to produce a Profile.

The file format for Profiles, and to a certain degree the architecture for image processing software using them, is the subject of a standard developed by the International Color Consortium (ICC) now widely adopted in the industry. (The standard may be downloaded from the ICC web site, http://www.color.org.) It will be understood by one skilled in the art that the present invention can use the ICC system but is not limited to such system.

Referring to FIG. 4A, common to more complex imaging devices is an inherent non-linearity in the relationship between the Device Code Values 420 of the captured image and the (colorimetric) data 410. This can be the result of sensor interaction with light, in the case of digital capture, or chemical interaction with light, in the case of film capture, or a combination of these systems. The extent of the non-linearity is dependent on the intricacies of the given imaging system. Non-linearity in an imaging system presents a difficulty in modeling the system mathematically. In simple imaging devices, a simple one dimensional look-up table will permit a channel by channel correction until suitable results are computed. In more complex non-linear devices, three dimensional look-up tables must be employed to account for non-linearity within a color channel but also non-linearity between color channels. Polynomial modeling 425 has successfully been used to create robust three dimensional look-up tables. The use of comprehensive polynomial modeling algorithms in conjunction with supporting information from well designed color charts, permits three dimensional look-up tables to be built for non-linear devices. The polynomial modeling uses adjustable coefficients to represent the non-linearities of the imaging device. Increasing the number of coefficients typically results in a better model and increased accuracy of the subsequent three dimensional look-up table. However, increasing the number of coefficients within the polynomial modeling requires enough data points to support the modeling process and prevent erroneous results. The erroneous results stem from poor color predictions for colors not on the color charts. Color charts with an increasing plurality of colors have been proven to work well in addressing the ability to model complex, non-linear systems. That is to say, a color chart composed of 200 colorimetrically well placed color patches provides better results than 100 color patches, which in turn provides better results than 25 color patches.

It is worthwhile to note the significance of including neutral patches in the aforesaid chart. Persons skilled in the art will appreciate that achieving correct reproduction of neutrals in an imaging system is of great importance. It is therefore recommended with this invention that enough neutral patches, graduated from black to white, be included in the target to permit the mathematical model to give greater weight to reducing errors of fit associated with neutrals. The required number of neutral patches depends upon a number of factors including system non-linearity; that ten percent of the total number of patches should be neutrals has been found generally adequate with targets of several hundred patches, but when the total number of patches is less than 60, a larger proportion should be devoted to neutrals. The well-known Macbeth Color Checker, for example, has 24 patches, of which six (25 percent) are neutrals. At least one neutral patch, preferably of visually average lightness (18 percent reflectance), is very useful to serve as a reference value throughout the imaging system from input device to output device.

For practical purposes a basic chart dealing with simple non-linearities can be constructed as follows. Choose six hues representing primary colors important to the system, for example red, green, blue, cyan, magenta, and yellow. Provide patches in each of these hues at the maximum saturation obtainable at three different lightness levels each. Then add patches of the same hues but with saturations mid-way between neutral and fully saturated. A well spaced neutral series of fifteen to twenty patches ranging from black to white should be incorporated. This arrangement of patches allows fitting of a second order polynomial model with sufficient constraints to avoid unreasonable errors. Finally, memory colors of significance to the intended application should be incorporated. The presence of memory colors improves the fit of the model in areas of particular visual importance. Typical memory colors include green foliage, skin, blue sky, etc. In summary, six hues times three lightness times 2 saturations equals 36, plus twenty neutrals, and 4 memory colors equals 60 patches total.

An upper limit for the chart is determined by two factors. One is a practical limit of the overall physical dimensions of the chart for portability and ease of use. It should be recognized that the individual patches must be large enough to facilitate measurement by spectrophotometer or colorimeter and to be easy to discriminate as components of an image. A 9 x 12 inch chart of three hundred patches typically satisfies these criteria. Two is that most input devices can be adequately modeled with polynomials having 25 to 50 terms, and 300 patches is generally sufficient to constrain the fit of such a polynomial. It is also helpful to include additional hues beyond the six primary colors previously mentioned.

The benefits of relating the number of patches in the chart to the degree of complexity and non-linearity of the capture device being modeled. The use of more patches results in a better prediction of performance of a complex, non-linear device; and a simpler, more compact chart which is easier to make and use, is appropriate when a simple, more linear capture device is being modeled.

Once an appropriate model has been determined, the corresponding look-up tables can be used as part of a Profile for the imaging device. In this case the look-up tables created act as the signal-processing transform. This Profile is then used to subsequently convert images obtained with the capture device and convert them to the original scene colorimetry or to a preferred color or tone scale rendering.

It is well known to those skilled in the art that the colors reproduced on, or produced from, common color image capture devices generally are not colorimetric matches of the colors originally captured by the element. Colorimetric errors can be caused by the color recording and color reproduction properties of the capture element and system. The distinction between the color recording and color reproduction properties of a capture element is fundamental. Color recording by a color imaging device is determined by its spectral sensitivity. The spectral sensitivity of a capture element is a measure of the amount of exposure at a given wavelength required to achieve a specific capture response. Color reproduction by an imaging system depends not only on the color recording properties of the capturing element as described above, but also on all subsequent steps in the image forming process. The color reproduction properties of the imaging element or system can vary the gamma, color saturation, hue, etc. but cannot fully compensate for problems caused by spectral sensitivities which are not correlates of the human visual system. Metamers are an example of such a problem. Metamerism occurs when two stimuli with different spectral reflectance appear identical to the eye under a specific illuminant. The term "Metamer" is defined as "property of two specimens that match under a specified illuminator and to a specified observer and whose spectral reflectances or transmittances differ in the visible wavelengths" (as described in *ASTM E 284, Standard Terminology of Appearance).* A capture device whose spectral sensitivities differ from that of the human visual system records the stimuli differently. Once recorded as disparate, a capture device's color reproduction will only amplify or minimize that difference.

In certain applications, it is desirable to form image representations that correspond more closely to the colorimetric values of the colors of the original scene recorded by the capture device rather than form image representations which correspond to the reproductions of those colors by the device itself. Examples of such applications include, but are not limited to, the production of medical and other technical images, product catalogues, magazine advertisements, artwork reproductions, and other applications where it is desirable to obtain color information which is a colorimetrically accurate record of the colors of the original scene. In these applications, the alterations in the color reproduction of the original scene colors by the color recording and color reproduction properties of the imaging element are undesirable.

Broadband colorants were used so as to approximate real world colorants common to scene elements typically captured by film systems, digital camera systems, and to a lesser extent, digital scanning systems. The broadband colorants minimize metameric differences caused by different illumination devices. Narrow band colorants used in the chart would have been more prone to metameric induced errors.

### Example 1: Color chart captured using color negative or color positive film and subsequently scanned.

A color negative film was scanned. The scanning of that color negative films result in a non-linear relationship between the output code values of the scanner and the original scene colorimetry. It has been determined that adequate accuracy within the color modeling could be significantly improved by increasing the number of color patches. Therefore, a more robust technique was sought incorporating more patches and subsequently a better sampling of color space. A color chart containing 264 patches of approximately ten hues of varying lightness and chroma was made. Due to the adequate color sampling of the color patch collection, the Profile modeling technique provided a robust Profile for this non-linear imaging system.

### Example 2: Color chart captured using a digital camera.

An image of the scene was captured using a Kodak DCS460 digital camera. The resulting digital code values for the picture elements (pixels) of the images were input to a computer. The color chart was previously measured colorimetrically by a conventional spectrophotometer or colorimeter, and the resulting data supplied to the same computer as the digital image. The software program used the code values of the digital image and the colorimetric data to construct a Profile. This Profile was used by image processing computer software to produce a colorimetrically accurate or preferred color rendition reproduction of the original scene by means, for example, of a color printer.

### Example 3: Improvements in Profile accuracy using a larger patch set.

In characterizing a scanner as a real world colorant input device, the quantity of patches was compared for resultant color accuracy. For those skilled in the art of color, the metric of CIELab ΔE was used to characterize system performance. This metric incorporates both lightness and color error and is common to color science practices. Color accuracy data was calculated using a 24 color patch set and a 264 color patch set. The mean error using the 24 patch set was 3.66 ΔE for the Profile development. The mean error of the 264 patch set was 2.23 ΔE. This improvement demonstrates the reduction of color error in using larger color patch sets for Profile generation.

### Example 4: Improvement in Profile accuracy using broadband pigments.

Visual comparisons of images processed through Profiles for the same imaging device using broadband pigments and narrow band dyes showed a significant color quality difference. Using a chart of known broadband pigments was shown to work significantly better than using a chart of known narrow band dyes for use in generating a Profile for a device capturing real world colorants.

## Claims

1. A chart having color patches, each color patch including information which permits the mapping of a digitized color image from an image captured by various means to construct a Profile usable in modifying the tone scale and color of the digital image, the number of color patches being greater than 24 and being selected to compensate for non-linear characteristics of image capture.

2. The chart according to claim 1 wherein the spectral characteristics of the colorants used to construct the chart are selected to enhance the effectiveness of the Profile.

3. A method of producing an improved digital image comprising the steps of:
(a) acquiring a digital image and a chart having more than 24 color patches including information which permits mapping the colors from the digital image, the number of color patches being selected to compensate for non-linear characteristics of elements in the acquisition process;
(b) constructing a Profile from the acquired color patches useable in modifying the digital image; and
(c) using the Profile to modify the acquired digital image.

4. The method of claim 3 wherein the elements include a film element, scanning devices including an image sensor, or electronic images provided from another source.

5. The method of claim 3 wherein the color patches include at least one neutral patch.

6. The method of claim 3 further including the step of forming one or more prints of the modified digital image.

7. The method of claim 3 further including the step of forming one or more softcopy images.

8. The method of claim 3 wherein the number of color patches is between 60 and 300.
